# FASCICULE DE BREVET EUROPEEN

(11) **EP 0 797 811 B1**
(45) Date de publication et mention de la délivrance du brevet: **06.05.1999**
(21) Numéro de dépôt: 95936926.5
(22) Date de dépôt: 01.12.1995
(51) Int. Cl.: G06K 7/10, G06K 19/07, G06K 7/00

(54) **ETIQUETTE OPTO-ELECTRONIQUE AVEC BASE DE TEMPS INTERNE**
MIT INNERER ZEITBASIS VERSEHENES OPTOELEKTRONISCHES ETIKETT
OPTO-ELECTRONIC TAG HAVING AN INTERNAL TIME BASE

(30) Priorité: 13.12.1994 CH 3759/94
(43) Date de publication de la demande: 01.10.1997
(73) Titulaire: VALTAC, Alex Beaud, 1228 Plan-les-Ouates (CH)
(72) Inventeur: BERNEY, Jean, Claude, CH-1343 Les Charbonnières (CH)
(74) Mandataire: Frei, Alexandra Sarah
(86) Numéro de dépôt international: CH9500283
(87) Numéro de publication internationale: WO9618970

(56) Documents cités:
- EP-A- 0 461 878
- FR-A- 2 548 803
- FR-A- 2 636 188
- GB-A- 2 196 203
- US-A- 4 877 945
- US-A- 5 354 979

## Description

Il est possible avec les moyens actuels de réaliser des étiquettes optoélectroniques autonomes comportant une mémoire non volatile et pouvant être alimentées, lues ou lues et écrites à distance. Des étiquettes de ce type sont décrites dans la demande de brevet française FR-2,548,803 et dans le brevet américain US-5,354,979. La demande de brevet FR-2,548,803 définissant l'état de la technique le plus proche est mentionnée dans le préambule de la revendication 1. La demande de brevet suisse 02 120/94-0 du 04/07/94 décrit une autre étiquette de ce type en se concentrant plus particulièrement sur les moyens optoélectroniques à mettre en oeuvre pour alimenter cette étiquette à distance, ainsi que pour envoyer et recevoir des informations par signaux optiques. Il va de soi que, indépendamment de la partie optoélectronique proprement dite, les procédures qui gèrent la communication entre l'étiquette et les moyens de lecture/écriture externes revêtent la plus grande importance et conditionnent la fiabilité même de ce type d'étiquette.

C'est le but de la présente invention de proposer une étiquette optoélectronique comportant des moyens simples et efficaces de gestion de cette communication. Cette étiquette optoélectronique comporte les caractéristiques mentionnées dans la revendication 1.

La figure 1 représente à titre d'exemple le schéma de principe d'une étiquette selon l'invention.

La figure 2 représente à titre d'exemple le schéma bloc d'une partie des sous-ensembles constitutifs de l'étiquette selon l'invention, plus particulièrement la base de temps avec le générateur de séquences , l'alimentation avec son circuit de contrôle, et un circuit simple d'analyse des signaux lumineux en provenance de l'extérieur.

La figure 3 représente certaines tensions caractéristiques du circuit d'alimentation et de ses moyens de contrôle.

La figure 4 représente quelques exemples de séquences de signaux lumineux délivrées par le générateur de séquences.

La figure 5 représente à titre d'exemple un schéma plus détaillé d'un générateur de séquences et du circuit de commande de la mémoire.

La figure 6 représente à titre d'exemple un circuit plus sophistiqué d'analyse des signaux lumineux en provenance de l'extérieur couplé au générateur de séquences.

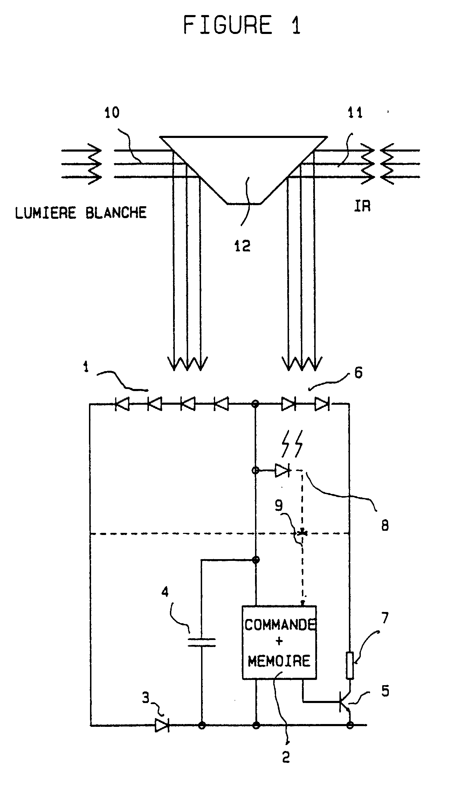

Sur la figure 1 on trouve 4 cellules électro-optiques 1, par exemple des cellules photo-voltaïques sur silicium amorphe ou des cellules AsGa sur silicium cristallin. Le choix du type de cellules dépend bien sûr de l'application concernée. On connaît part exemple des étiquettes destinées à des applications industrielles ou à des contrôles d'accès ayant un format carte de crédit où la surface disponible pour les cellules électro-optiques est relativenment importante, ce qui permet l'utilisation de cellules de grande surface mais de faible prix, comme dans les calculatrices électroniques bon marché. Par ailleurs il y a des applications où l'on recherche une miniaturisation maximum qui nécessite des cellules de haut rendement mais de très petite surface. Lorsque on dirige un rayon lumineux sur ces cellules, celles-ci délivrent une tension électrique permettant d'alimenter la mémoire avec son circuit de commande 2 par l'intermédiaire d'une diode 3 et d'une capacité tampon 4. Cette capacité 4 joue un rôle important car elle permet de délivrer des pointes de courant que les cellules ne seraient pas capables de fournir, et offre une réserve d'énergie pour, le cas échéant, terminer une opération en cours en cas de disparition de la source lumineuse d'énergie. De préférence le circuit de commande 2 comportera un circuit permettant de limiter cette tension d'alimentation en cas d'éclairage trop violent des cellules. Le circuit de commande 2 est relié à la base d'un transistor 5 qui alimente par exemple 2 diodes électroluminescentes 6 par l'intermédiaire d'une résistance 7. Il est ainsi possible, par l'intermédiaire de ces diodes électroluminescentes, d'envoyer vers l'extérieur des signaux lumineux en rapport avec le contenu de la mémoire. Ces signaux peuvent être détectés par des moyens connus. Par exemple si les diodes sont du type IR, on peut utiliser un détecteur IR tel ceux utilisés pour la détection de personne.

Une solution plus performante consiste à utiliser une mémoire à lecture/écriture de type EEPROM qui conserve ses informations en absence de source d'alimentation.

Il est alors nécessaire de pouvoir envoyer les informations à stocker dans la mémoire et commander les différentes séquences de lecture et d'écriture depuis l'extérieur.

Pour cela, on peut par exemple moduler le rayon lumineux dirigé sur l'étiquette. Ces modulations peuvent être détectées par un détecteur optique, par exemple une photo-diode 8 reliée par une entrée 9 du circuit de commande 2 à un circuit d'amplification et de mise en forme de ce dernier.

Une autre solution plus simple consiste à utiliser directement tout ou partie des cellules électro-optiques 1 pour détecter ces modulations. En effet, ces cellules peuvent avoir un temps de réaction suffisamment faible pour introduire des signaux de commande par des interruptions courtes du rayon lumineux (modulation tout ou rien) à une fréquence de l'ordre de plusieurs kHz. Ces interruptions courtes sont filtrées par la diode 3 et la capacité 4 de telle manière que leur influence sur la tension d'alimentation soit négligeable. Les signaux de commande générés par les cellules 1 sont ensuite appliqués à l'entrée 9 du circuit de commande de la mémoire 2.

Une autre possibilité consiste à utiliser les diodes électroluminescentes 6 comme photodétecteurs. On sait en effet que ces éléments, dans certaines configurations, peuvent être réversibles et peuvent donc être utilisés comme émetteurs et récepteurs.

On peut constater qu'il est possible de séparer totalement la partie apport d'énergie représentée par les cellules 1, et la partie émetteur-récepteur d'informations représentée par la photo-diode 8, cette dernière pouvant être supprimée dans certains cas, et les diodes 6. Cette séparation peut se faire également au niveau de la longueur d'onde des faisceaux lumineux. Pour la partie apport d'énergie, on utilisera par exemple une lumière blanche similaire à la lumière solaire. Pour la partie émetteur-récepteur on travaillera de préférence en infra-rouge, ce qui donne une lumière beaucoup plus sélective et donc moins sensible aux perturbations extérieures. Dans le cas où les diodes 6 sont réversibles et utilisées également comme photo-détecteurs, c'est celles-ci qui sont reliées à l'entrée 9 du circuit de commande 2. Les 3 possibilités de branchement de l'entrée 9 sont représentées en pointillé sur la figure 1.

Dans le dernier exemple cité, l'apport d'énergie se fera donc en permanence en concentrant sur l'étiquette un rayon de lumière blanche 10, et la communication des informations par un rayon infra-rouge bidirectionnel 11. Le prisme 12 de la figure permet de combiner ces deux rayons de manière à représenter schématiquement le fonctionnement du système, mais il est bien clair que ces deux rayons peuvent provenir de deux sources complètement distinctes et complètement séparées dans l'espace. Il existe de très nombreuses possibilités de générer ces rayons lumineux et de les envoyer sur la surface de l'étiquette, soit de manière directe, soit de manière indirecte par exemple par l'intermédiaire d'une combinaison d'éléments optiques, filtres, lentilles, voir fibres optiques, etc.

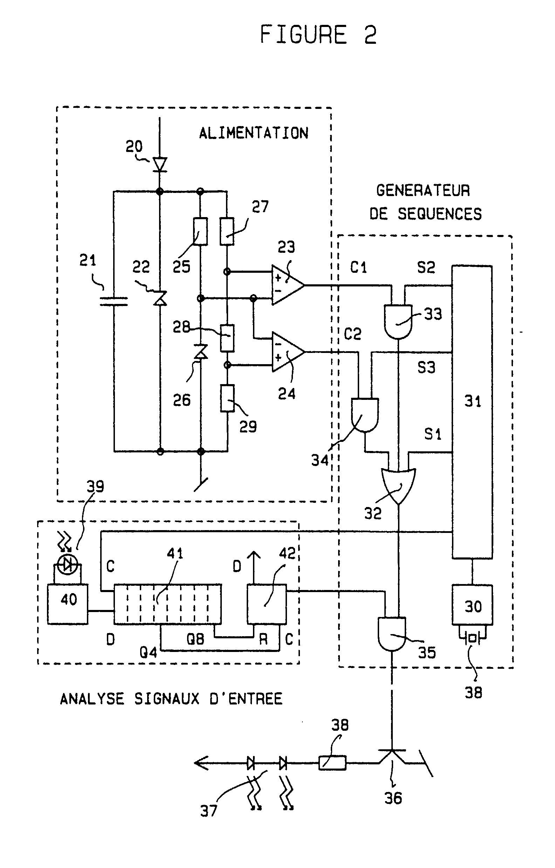

La figure 2 représente à titre d'exemple le schéma bloc d'une partie des sous-ensembles constitutifs de l'étiquette selon l'invention, plus particulièrement la base de temps avec le générateur de séquences , l'alimentation avec son circuit de contrôle, et un circuit simple d'analyse des signaux lumineux en provenance de l'extérieur.

L'alimentation de l'étiquette est fournie par les cellules photo-voltaïques à travers la diode 20. La capacité tampon 21 permet d'accumuler une certaine réserve d'énergie susceptible d'assurer le fonctionnement de l'étiquette pendant un laps de temps déterminé même dans les cas extrêmes, alors que la diode zener 22 limite la tension d'alimentation vers le haut.

La tension d'alimentation est branchée aux entrées - de deux comparateurs 23 et 24 à travers la résistance 25 et la diode zener 26 qui fixent une référence de tension Vz. Le diviseur de tension formé par les résistances 27, 28 et 29 fixent les tensions sur les entrées + de ces deux comparateurs 23 et 24. Il s'agit là d'une configuration classique de comparaison de tension. La sortie C1 du comparateur 23 va passer à 1 lorsque la tension d'alimentation dépasse la valeur V1 = Vz * (R27+R28+R29)/(R28+R29), et la sortie C2 du comparateur 24 va passer à 1 lorsque la tension d'alimentation dépasse V2 = Vz * (R27+R28+R29)/(R29), comme représenté à la figure suivante. Ces deux comparateurs permettent donc de contrôler la tension d'alimentation, et plus particulièrement le niveau de charge de la capacité 21.

On sait que, dans la programmation des mémoires non volatiles, il faut une énergie suffisante pour assurer la qualité de l'écriture et garantir la durée de celle-ci. Il est donc préférable de renoncer à cette opération d'écriture si la disponibilité de cette énergie n'est pas garantie, d'où l'importance de ce contrôle de l'alimentation. Il va de soi que n'importe quelle configuration de circuit susceptible de contrôler ces niveaux de tension peut être utilisée. De même il est possible de ne détecter qu'un seul niveau, ou des niveaux supplémentaires selon les besoins.

Le schéma de la figure 2 comporte également une base de temps interne 30 qui peut être un simple oscillateur RC. Cet oscillateur commande un générateur de séquences 31 formé d'une combinaison de compteurs et de circuits logiques agencés de manière à générer les différentes séquences des signaux électro-optiques qui seront envoyés vers l'extérieur. Dans notre exemple, ce générateur délivre trois séquences S1, S2 et S3 qui seront décrites plus en détail aux figures suivantes. La séquence S1 est reliée à l'entrée d'une porte OR 32 dont les deux autres entrées sont reliées aux sorties de deux portes AND 33 et 34. Les entrées de la porte AND 33 sont reliées à la sortie S2 du générateur et à la sortie C1 du comparateur 23, alors que les entrées de la porte AND 34 sont reliées à la sortie S3 du générateur et à la sortie C2 du comparateur 24.

Lorsque la tension d'alimentation est inférieure à V1, les sorties C1 et C2 sont à 0 et les portes 33 et 34 sont fermées. Seule la séquence de signaux S1 arrive à la sortie de la porte 32.

Lorsque la tension d'alimentation passe entre V1 et V2, la sortie C1 passe à 1 ce qui débloque la porte 33. La séquence S2 passe alors sur la deuxième entrée de la porte 32. La séquence des signaux à la sortie de cette porte est égale à S1+S2.

Lorsque la tension d'alimentation dépasse V2, la sortie C2 passe également à 1 ce qui débloque la porte 34. La séquence S3 passe alors sur la troisième entrée de la porte 32. La séquence des signaux à la sortie de cette porte 32 est alors égale à S1+S2+S3.

Les signaux à la sortie de la porte 32 sont appliqués sur une entrée de la porte AND 35. Si celle-ci est passante, ces signaux apparaissent à la sortie de cette porte, laquelle est reliée à la base d'un transistor 36 relié aux diodes émettrices de lumière 37 par l'intermédiaire de la résistance 38. Les signaux lumineux émis par ces diodes sont donc l'image des séquences de signaux à la sortie de la porte 32, lesquelles dépendent directement des états de sortie des comparateurs 23 et 24, et sont donc représentatives entre autres de l'état de charge de la capacité 21. Des exemples de configuration de ces séquences de signaux sont décrites aux figures suivantes. Ces configurations peuvent être décodées par des moyens de lecture optiques, et il sera ainsi possible de savoir par exemple si le rayon lumineux que l'on dirige sur l'étiquette a une énergie suffisante pour alimenter l'étiquette et assurer l'écriture dans la mémoire avec la sécurité suffisante. Notons que la précision en fréquence des séquences des signaux lumineux envoyés vers l'extérieur dépend directement de la précision de la base de temps 30. Plus celle-ci est faible, plus les moyens externes de décodage des séquences de signaux sont complexes et délicats, nécessitant des synthétiseurs de fréquence et des moyens sophistiqués de traitement. Contrairement, plus la fréquence de ces signaux est précise, plus il sera facile de les décoder même avec un niveau de bruit élevé, ce qui est particulièrement important lorsque on veut travailler à distance élevée. Un moyen simple pour obtenir cette précision est d'utiliser un résonnateur à quartz 38 comme référence de la base de temps. On sait qu'il existe actuellement des résonnateurs à quartz de très petites dimensions qui peuvent être intégrés même dans des étiquettes de petites dimensions.

Nous avons vu comment le générateur peut gérer les séquences des signaux optiques émis vers l'extérieur. Il est également possible de l'utiliser pour analyser les signaux en provenance de l'extérieur. Dans cet exemple simple, les signaux détectés par la photo-diode 39 sont amplifiés par l'ampli 40 qui délivre à sa sortie un signal tout ou rien sur l'entrée d d'un registre à décalage de 8 étages 41, lequel reçoit sur son entrée clock un signal de commande en provenance du générateur 31. La sortie du quatrième étage du registre est branchée sur l'entrée clock d'un flip-flop 42 dont l'entrée D est reliée au plus de l'alimentation, alors que la sortie du huitième étage du registre est branchée à l'entrés reset de ce flip flop 42. La sortie du flip flop 42 est reliée à la deuxième entrée de la porte AND 35. Lorsque cette sortie est à 1, la porte laisse passer les séquences de signaux générés par le générateur 31. Si cette sortie est à 0, ces signaux sont coupés. Il s'agit donc là d'un commutateur permettant de commander de l'extérieur la mise en service de l'étiquette. En effet, dans le cas où il y a plusieurs étiquettes à proximité les unes des autres, il pourrait y avoir des interférences entre elles si elles s'enclenchent automatiquement à l'apparition d'une tension sur les cellules photo-voltaïques. Un commutateur rudimentaire comme celui de la figure 2 peut donc se révéler utile.

Comme nous le verrons plus loin, les signaux lumineux en provenance de l'extérieur sont des signaux très courts. La sortie de l'ampli 40 est donc presque en permanence à 0 et le registre de décalage est à 0. Si on envoye un signal de plus longue durée, la sortie de l'ampli 40 reste à 1 et cet état 1 progresse dans le registre au rythme donné par les signaux de commande de fréquence relativement basse sur l'entrée clock. Au bout de 4 clocks, la sortie Q4 passe à 1, ce qui fait basculer la sortie du flip-flop 42 à 1 et ouvre la porte 35. Si le signal à la sortie de l'ampli 40 passe à 0 à ce moment là, ce flip-flop 42 reste à 1 et l'étiquette délivre ses signaux lumineux vers l'extérieur. Pour faire basculer le flip-flop 42 à 0 et couper l'émission des signaux lumineux. il faut envoyer un signal de plus longue durée, jusqu'à ce que la sortie Q8 passe à 1. A ce moment là le flip-flop 42 est remis à 0 et la porte 35 est coupée. Ainsi on peut utiliser la base de temps et le générateur de séquences pour discriminer de manière simple des ordres d'enclenchement et de déclenchement en provenance de l'extérieur. Notons que l'on peut également discriminer des interruptions plus ou moins longues du signal lumineux en inversant la phase de sortie de l'ampli 40. Cela pourrait être particulièrement le cas si l'on utilise des interruptions de la lumière blanche qui alimente les cellules photo-voltaïques pour donner ces ordres d'enclenchement et de déclenchement. L'entrée de l'ampli 40 serait alors branchée directement sur ces cellules, et non pas sur la photo-diode 39. Des exemples d'analyse des signaux d'entrés plus sophistiqués sont donnés aux figures suivantes.

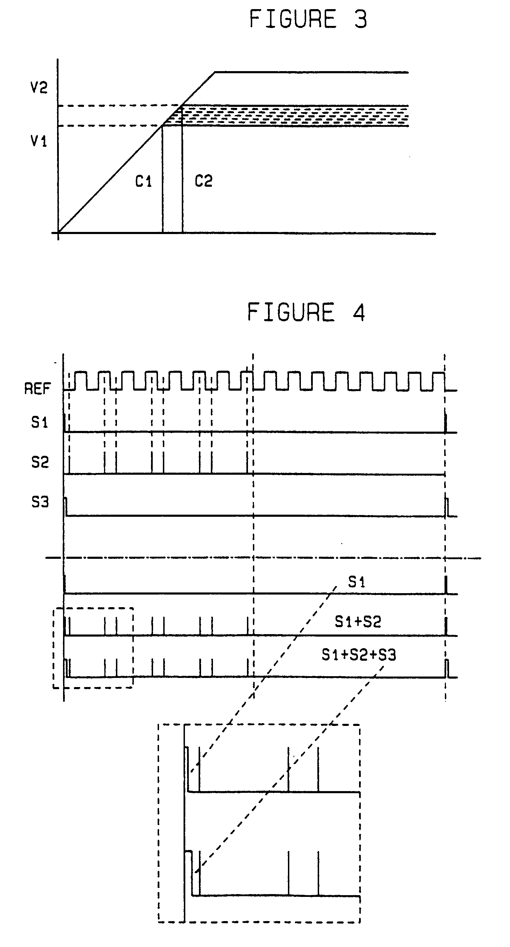

La figure 3 représente certaines tensions caractéristiques du circuit d'alimentation et de ses moyens de contrôle. Elle montre notamment la commutation des sorties C1 et C2 en fonction de la tension d'alimentation et des niveaux de détection V1 et V2

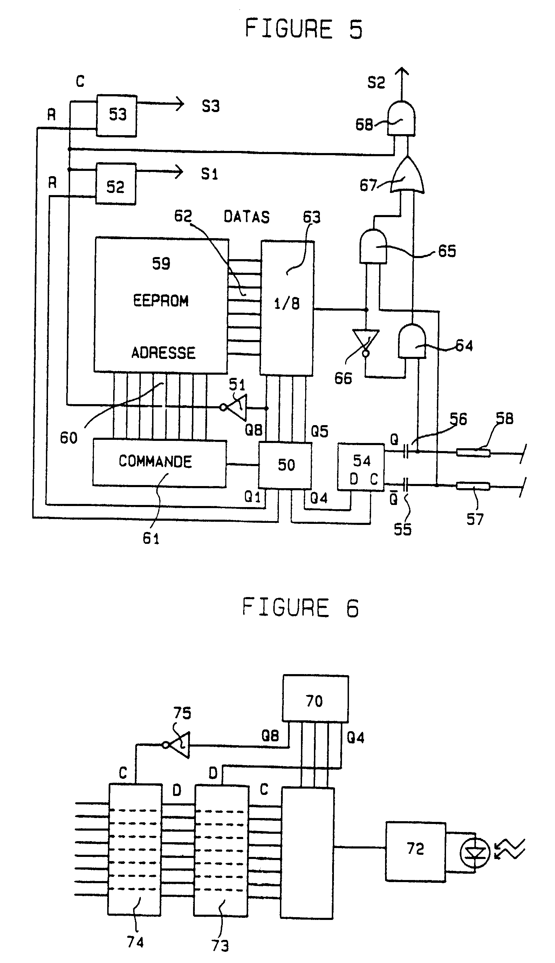

La figure 4 représente quelques exemples de séquences de signaux lumineux délivrées par le générateur de séquences. Le générateur de séquences génère une première séquence S1 sous forme d'impulsions de période fixe et de durée moyenne, par exemple 4 microsecondes pour une période de 1'000 microsecondes. La séquence S2 est représentée par une suite de huit impulsions courtes, par exemple 2 microsecondes, se répétant selon la même période que la séquence S1. Cette suite d'impulsions courtes représente en fait une information logique de 8 bits dans laquelle il serait possible de distinguer les 1 des 0 par la durée des impulsions. Cependant, dans le cas donné comme exemple, cette distinction se fait en variant la phase de ces impulsions à l'intérieur de la période. Ainsi, si l'on compare la position de ces impulsions par rapport à un signal de référence, on peut considérer que l'impulsion qui tombe dans la première période à partir de S1 correspond au bit 1, l'impulsion qui tombe dans la deuxième période au bit 2, etc. La valeur du bit est de 0 si l'impulsion correspondante tombe dans la demi-période où le signal de référence est à 0. Il est de 1 s'il tombe dans la demi-période où ce signal est à 1. Ces informations de 8 bits peuvent correspondre au contenu d'une position de la mémoire ou à l'adresse donnée par le circuit de commande de celle-ci. La figure 5 donne un exemple de circuit permettant de générer ces signaux.

La figure 4 donne les trois possibilités de combinaison des signaux lumineux émis par l'étiquette selon l'état de charge de la capacité tampon. Lorsque celle-ci est trop faible, on supprime les signaux correspondant aux informations logiques et on ne maintient qu'un signal minimum S1 qui indique à l'extérieur que l'étiquette est alimentée, bien qu'insuffisamment pour assurer son bon fonctionnement. Lorsque la tension d'alimentation est comprise entre V1 et V2, on ajoute les impulsions correspondant aux informations logiques. Il est ainsi possible par exemple de lire l'étiquette, mais non d'y écrire. Pour cela il faut que la tension d'alimentation soit supérieure à V2. A ce moment là on ajoute le signal S3 qui permet de distinguer cette condition par une durée double de la première impulsion de la période de la séquence.
Même quand on parle d'impulsions de durée moyenne ou longue, il s'agit toujours de durées relatives permettant de distinguer facilement les impulsions entre elles. Cependant ces durées d'impulsions sont toujours faibles par rapport à la période de la séquence proprement dite, ceci pour diminuer la consommation. En effet, si l'on injectait en permanence un courant de 10mA dans les LED, on devrait avoir une surface très importante des cellules photo-voltaïques. En ayant des 8 impulsions de 2 microsecondes et 1 impulsion de 8 microseconde par période de 1'000 microsecondes, on divise cette consommation dans le rapport 24/1'000, soit environ 0,24 mA. Cette manière de faire ne serait pas possible sans l'utilisation de la capacité tampon qui est capable de fournir momentanément ces pointes de courant.

On peut remarquer que toutes les signaux émis vers l'extérieur sont groupés dans la première demi-période de la séquence. De cette manière on peut réserver la deuxième demi-période de cette séquence à la réception de signaux en provenance de l'extérieur. Ces signaux peuvent être des impulsions courtes répartis en phase comme les signaux émis pendant la première demi-période, comme cela est représenté à la figure 6. On a ainsi un système uniforme tant à l'émission qu'à la réception des signaux.

La figure 5 représente à titre d'exemple un schéma plus détaillé d'un générateur de séquences et du circuit de commande de la mémoire selon l'invention. Ce générateur comporte un compteur binaire 50 comportant dans notre exemple 8 étages et présentant les sorties Q1 à Q8. La sortie Q8 a une période de 1'000 microsecondes, si bien que Q1 a une période de 8 microsecondes, Q2 16 microsecondes, Q3 32 microsecondes etc. La sortie Q8 est reliée par l'inverseur 51 aux entrées clock de deux flip-flops 52 et 53. L'entrée reset du flip-flop 52 est reliée à la sortie Q1 du compteur 50. Ce flip-flop bascule à 1 à chaque début de période de Q8, soit toutes les 1'000 microsecondes, puis revient à 0 1/2 période de Q1 plus tard, soit après 4 microsecondes. Le flip-flop 52 génère donc les impulsions S1 représentées à la figure 4. L'entrée reset du flip-flop 53 est reliée à la sortie Q2 du compteur 50. Ce flip-flop bascule à 1 à chaque début de période de Q8, soit toutes les 1'000 microsecondes, puis revient à 0 1/2 période de Q2 plus tard, soit après 8 microsecondes. Le flip-flop 53 génère donc les impulsions 53 représentées à la figure 4. La sortie Q3 est reliée à l'entrée clock d'un flip-flop 54 dont l'entrée D est reliée à Q4. Ce flip-flop va donc avoir la même période que Q4, soit 64 microsecondes, mais va être décalé de 1/2 période de Q3, soit 16 microsecondes. Les sorties Q et Qinv du flip-flop 54 sont dérivées par les capacités 55 et 56 et les résistances 57 et 58 de manière à former des impulsions courtes de l'ordre de 1 à 2 microsecondes, décalées entre elles de 1/2 période de Q4, qui vont être utilisées pour pour générer la séquence S2.

L'étiquette selon l'invention comporte également une EEPROM 59 dont les entrées d'adresse 60 sont reliées à un circuit de commande de la mémoire 61 relié au compteur 50 de manière que le changement d'adresse soit synchronisé sur ce dernier. Les sorties DATA 62 de la mémoire 59 sont reliées à un démultiplexeur 1/8 63. Ce démultiplexeur a trois entrées de sélection reliées aux sorties Q5 à Q7 du compteur 50.

La séquence S2 est générée de la manière suivante. Les impulsions formées par les capa 55 et 56 sont appliquées à une entrée des portes AND 64, respectivement 65. La deuxième entrée de la porte 65 va sur la sortie du démultiplexeur 63. Cette sortie va également sur un inverseur 66 dont la sortie est reliée à la deuxième entrée de la porte 64. Ces deux portes 64 et 65 travaillent donc en alternance. Lorsque la première est bloquée, l'autre est passante et vice verça. Les sorties de ces deux portes 64 et 65 sont branchées sur une porte OR 67. Ainsi, si la sortie du démultiplexeur 63 est à 1, c'est l'impulsion formée par la capa 55 qui passera à la sortie de la porte 6; si elle est à 0, c'est celle formée par la capa 56 qui passera plus loin. On génère donc bien une séquence d'impulsions comme représentée sous S2 à la figure 4. La répartition dans le temps de cette séquence d'impulsions est une relation directe des datas contenus dans la mémoire 59, datas qui apparaissent séquentiellement à la sortie du démultiplexeur 63, balayés qu'ils sont au moyen des sorties Q5 à Q7 du compteur 50.

Notons que l'on peut transmettre de la même manière vers l'extérieur des datas concernant d'autres paramètres que le contenu de la mémoire, par exemple les adresses données par le circuit de commande de la mémoire, ou tout autres données en rapport avec le fonctionnement de l'étiquette.

Enfin la sortie de la porte 67 est reliée à l'entrée d'une porte AND 68 dont la deuxième entrée est reliée à la sortie de l'inverseur 51. Pendant la demi-période où cette sortie est à 0, la porte 68 est bloquée et ne laisse plus passer de signaux vers l'extérieur. Cette demi-période peut donc être utilisée particulièrement pour recevoir et analyser des signaux en provenance de l'extérieur. Ces signaux peuvent être mis en forme de la même manière et avec la même répartition dans le temps que les signaux de sortie, ce qui permet d'utiliser un circuit similaire pour le décodage de ces signaux.

La figure 6 représente à titre d'exemple un circuit plus sophistiqué d'analyse des signaux lumineux en provenance de l'extérieur couplé au générateur de séquences. Ce générateur comporte le compteur 70 qui est le même que le compteur 50 de la figure précédente. Ce compteur a des sorties Q4 à Q8. Les sorties Q5 à Q7 sont reliées aux entrées de sélection d'un multiplexeur dont l'entrée est reliée à la sortie d'un ampli 72 des signaux en provenance de l'extérieur. Ces signaux se présentent sous forme d'impulsions courtes qui vont être dirigées selon leur phase sur les entrées clock 72 de 8 D latches 73 dont les entrées D sont reliées à la sortie Q4 du compteur 70. Ainsi les 8 D latches passeront à tour de rôle à 0 ou à 1 selon que l'impulsion sur leur entrée clock arrive pendant la demi-période où Q4 est à 0 ou à 1. Cette combinaison permet de reconstituer une information parrallèle de 8 bits qui va être enregistrée par un deuxième groupe de D latches dont les entrées D sont reliées aux sorties des 8 latches précédents, et dont les entrées clock sont branchée à la sortie d'un inverseur 75 dont l'entrée est reliée à la sortie Q8 du compteur 70. Ainsi on va reconstituer l'information byte par byte en fonction de la répartition des signaux d'entrée dans le temps, ces derniers étant synchronisés sur le générateur de séquences interne. Ce dernier sert donc aussi bien à générer les séquences de signaux de sortie qu'à analyser les signaux d'entrée.

Il va de soi que de très nombreuses autres combinaisons sont possible, mais leur description n'apporterait pas d'éléments supplémentaires à la compréhension de l'invention.

## Revendications

1. Etiquette optoélectronique comportant
des cellules électro-optiques **(1)** agencés de manière à capter de la lumière **(10)** pour alimenter l'étiquette optoélectronique,
une mémoire électronique **(59)** capable de conserver son état en l'absence de source d'alimentation,
un circuit de commande **(61)** relié à la mémoire électronique **(59)**,
plusiseurs moyens électro-optiques **(6,8,39)** agencés de manière à détecter des signaux lumineux d'entrée **(11)** et à envover des signaux lumineux de sortie **(37)** et
un générateur de séquences **(31)** avec une base de temps **(30)**,
**caractérisée par le fait**
qu'une alimentation de l'étiquette optoélectronique est fournie par les cellules électro-optiques **(1)** à travers une capacité tampon **(21)** permettant de délivrer une tension d'alimentation **(V)** et d'accumuler une certaine réserve d'énergie,
que le générateur de séquences **(31)** génère un signal minimum **(S1)** étant relié à une première porte **(32)**, un signal de niveau moyen **(S2)** étant relié à une deuxième porte **(33)**, un signal de niveau maximum **(S3)** étant relié à une troisième porte **(34)**,
que la deuxième porte **(33)** et troisième porte **(34)** sont reliées à la première porte **(32)**,
que la première porte **(32)** s'ouvre lorsque la tension d'alimentation **(V)** est inférieure à une première tension **(V1)** permettant au signal minimum **(S1)** de passer ladite première porte **(32)** indiquant que l'étiquette optoélectronique est alimentée, bien qu'insuffisamment pour une opération demandant une énergie d'un niveau moyen ou maximum,
que la deuxième porte **(33)** s'ouvre lorsque la tension d'alimentation **(V)** est supérieure à la première tension **(V1)** et inférieure à une deuxième tension **(V2)** permettant à une séquence de signaux **(S1+S2)** de passer ladite première porte **(32)** indiquant que l'étiquette optoélectronique est alimentée suffisamment pour une opération demandant une énergie d'un niveau moyen,
que la troisième porte **(34)** s'ouvre lorsque la tension d'alimentation **(V)** est supérieure à la deuxième tension **(V2)** permettant à une séquence de signaux **(S1+S2+S3)** de passer ladite première porte **(32)** indiquant que l'étiquette optoélectronique est alimentée suffisamment pour une opération demandant une énergie de niveau maximum,
que les séquences de signaux **(S1,S1+S2,S1+S2+S3)** permettent d'envoyer des signaux lumineux de sortie **(37)** indiquant à l'extérieur l'état de charge de la capacité tampon **(21)** en fonction de la présence des séquences de signaux **(S1,S1+S2,S1+S2+S3)**,

2. Etiquette optoélectronique selon la revendication 1,
**caractérisée par le fait**
que la deuxième et troisième porte **(33,34)** sont des portes AND,
que la première porte **(32)** est une porte OR et
que les séquences de signaux **(S1,S1+S2,S1+S2+S3)** sont reliés à une diode électroluminescente **(6)** permettant d'envoyer des signaux lumineux de sortie **(37)**.

3. Etiquette optoélectronique selon la revendication 1 ou 2,
**caractérisée par le fait**
que la tension d'alimentation **(V)** délivrée par la capacité tampon **(21)** est branchée aux entrées de deux comparateurs **(23,24)**,
qu'une sortie **(C1)** du premier comparateur **(23)** est relié à l'entrée de la deuxième porte **(33)** et une sortie **(C2)** du deuxième comparateur **(24)** est relié à l'entrée de la troisième porte **(34)**,
que les sorties **(C1,C2)** sont égales à 0 fermant la deuxième et troisième porte **(33,34)** lorsque la tension d'alimentation **(V)** est inférieure à la première tension **(V1)**,
que la sortie **(C1)** du premier comparateur est égale à 1 ouvrant la deuxième porte **(33)** et la sortie **(C2)** du deuxième comparateur est égale à 0 lorsque la tension d'alimentation **(V)** est supérieure à la première tension **(V1)** et inférieure à la deuxième tension **(V2)** et
que les sorties **(C1,C2)** sont égales à 1 ouvrant la deuxième et troisième porte **(33,34)** lorsque la tension d'alimentation **(V)** est supérieure à la deuxième tension **(V2)**.

4. Etiquette optoélectronique selon une des revendications 1 à 3,
**caractérisée par le fait**
qu'elle comporte un moyen électro-optique **(39)** agencé de manière à détecter des signaux lumineux d'entrée **(11)** et un amplificateur **(40)** amplifiant ces signaux lumineux d'entrée **(11)** pour délivrer des signaux correspondants tout ou rien et
qu'elle comporte un registre à décalage **(41)** ayant une entrée reliée à une sortie de l'amplificateur **(40)** et une entrée reliée au générateur de séquences **(31)**,
que le registre à décalage **(41)** enregistre des états égaux à 1 de la sortie de l'amplificateur **(40)** pour tout signal lumineux d'entrée **(11)** détecté par le moyen électro-optique **(39)** arrivant avec un signal **(C)** en provenance du générateur de séquences **(31)** et
que ces états égaux à 1 progressent dans le registre à décalage **(41)** si la sortie de l'amplificateur **(40)** reste à un état égale à 1.

5. Etiquette optoélectronique selon une des revendications 1 à 4,
**caractérisée par le fait**
que les signaux lumineux d'entrée **(11)** sont détectés par une photo-diode **(8)**,
qu'une sortie de la photo-diode **(8)** est reliée à un amplificateur **(72)** formant des impulsions,
que lesdites impulsions sont dirigés selon leur phase sur les entrées de latches **(73)** permettant de reconstituer une information parallèle à partir des signaux lumineux d'entrée **(11)** permettant de commander le circuit de commande **(61)** et d'écrire dans la mémoire électronique **(59)**.

6. Etiquette optoélectronique selon une des revendications 1 à 4,
**caractérisée par le fait**
que le circuit de commande **(61)** et la mémoire électronique **(59)** sont reliés à un démultiplexeur **(63)**,
que le signal de niveau moyen **(S2)** est une suite d'impulsions,
que les données relatives à l'étiquette optoélectronique sont balayées séquentiellement à la sortie du démultiplexeur **(63)** par le signal de niveau moyen **(S2)**, permettant une distribution dans le temps de la suite d'impulsions dudit signal de niveau moyen **(S2)** et d'envoyer des signaux lumineux de sortie **(37)** indiquant à l'extérieur les données relatives à l'étiquette optoélectronique en fonction de la répartition dans le temps de la suite d'impulsions dudit signal de niveau moyen **(S2)**.

7. Etiquette optoélectronique selon une des revendications 1 à 6,
**caractérisée par le fait**
que les séquences de signaux **(S1,S1+S2,S1+S2+S3)** permettant d'envoyer des signaux lumineux de sortie **(37)** indiquant à l'extérieur les données relatives à l'étiquette optoélectronique sont groupés dans une première demi-période d'une séquence de signaux **(S1,S1+S2,S1+S2+S3)** et
que les signaux lumineux d'entrée **(11)** de provenance de l'extérieur sont groupés dans une deuxième demi-période de la séquence de signaux **(S1,S1 + S2,S1 + S2 + S3)**.

8. Méthode d'indication des niveaux de tension d'alimentation **(V)** d'une capacité de tampon **(21)** alimententant une étiquette optoélectronique selon la revendication 1,
**caractérisée par le fait**
que des différents signaux **(S1,S2,S3)** générés par un générateur de séquences **(31)** sont ajoutés séquentiellement formant des séquences de signaux **(S1,S1+S2,S1+S2+S3)** indiquant les différents niveaux de tension d'alimentation **(V)** et
que lesdites séquences de signaux **(S1,S1+S2,S1+S2+S3)** sont envoyées sous forme de signaux lumineux de sortie **(37)** à l'extérieur.

9. Utilisation de la méthode d'indication des niveaux de tension d'alimentation **(V)** d'une capacité de tampon **(21)** alimentant une étiquette optoélectronique selon la revendication 8,
**caractérisée par le fait**
que les séquences de signaux **(S1,S1+S2,S1+S2+S3)** indiquant les différents niveaux de tension d'alimentation **(V)** de la capacité tampon **(21)** sont décodées par des moyens de lecture optique permettant de savoir si le rayon lumineux dirigé sur l'étiquette optoélectronique a une énergie suffisante pour alimenter l'étiquette optoélectronique et pour assurer les opérations demandant une énergie de niveau moyen ou maximum.

10. Méthode d'opération d'une étiquette optoélectronique selon la revendication 4,
**caractérisée par le fait**
que le registre à décalage **(41)** enregistre des états égaux à 1 de la sortie de l'amplificateur **(40)** pour tout signal lumineux d'entrée **(11)** détecté par le moyen électro-optique **(39)** arrivant avec un signal **(C)** en provenance du générateur de séquences **(31)** et
que ces états égaux à 1 progressent dans le registre à décalage **(41)** si la sortie de l'amplificateur **(40)** reste à un état égale à 1, permettant d'analyser des signaux en provenance de l'extérieur.

11. Méthode selon la revendication 10,
**caractérisée par le fait**
que le registre à décalage **(41)** a une première et une deuxième sortie **(Q4,Q8)** reliées à une porte **(35)**,
que le registre à décalage **(41)** ouvre la porte **(35)** aux séquences de signaux **(S1,S1+S2,S1+S2+S3)** à envoyer vers l'extérieur lorsque un état égale à 1 passe à la première sortie **(Q4)** et
que le registre à décalage **(41)** ferme la porte **(35)** aux séquences de signaux **(S1,S1+S2,S1+S2+S3)** à envoyer vers l'extérieur lorsque un tel état égale à 1 passe à la deuxième sortie **(Q8)**, permettant d'allumer ou d'éteindre l'étiquette optoélectronique à partir de l'extérieur.

## Patentansprüche

1. Optoelektronische Etikette mit optoelektronischen Zellen (1), die derart angeordnet sind, dass sie Licht (10) zur Speisung der optoelektronischen Etikette aufnehmen, mit einem elektronischen Speicher (59), der seinen Inhalt auch in Abwesenheit einer Speisequelle behält, mit einer Steuerschaltung (61), die mit dem elektronischen Speicher (59) verbunden ist, mit mehreren optoelektronischen Mitteln (6, 8, 39), die derart angeordnet sind, dass sie Eingangslichtsignale (11) erfassen und Ausgangslichtsignale (37) aussenden, dadurch gekennzeichnet, dass eine Speisung der optoelektronischen Etikette durch die optoelektronischen Zellen (1) über eine Pufferkapazität (21) erfolgt, was die Abgabe einer Speisespannung (V) und die Ansammlung einer Energiereserve ermöglicht, dass ein Taktgeber (31) ein minimales Signal (S1) bildet, das an einem ersten Gatter (32) anliegt, dass er ein mittleres Signal (S2) bildet, das an einem zweiten Gatter (33) anliegt, dass er ein maximales Signal (S3) bildet, das an einem dritten Gatter (34) anliegt, dass das zweite Gatter (33) und das dritte Gatter (34) mit dem ersten Gatter (32) verbunden sind, dass sich das erste Gatter (32) öffnet, sobald die Speisespannung (V) niedriger als eine erste Spannung (V1) ist, so dass das minimale Signal (S1) das erste Gatter (32) passiert und anzeigt, dass die optoelektronische Etikette mit einer Speisung versorgt ist, wobei diese Speisung für einen Betrieb auf einem mittlerem oder maximalem Energieniveau ungenügend ist, dass sich das zweite Gatter (33) öffnet, sobald die Speisespannung (V) höher als die erste Spannung (V1) und niedriger als eine zweite Spannung (V2) ist, so dass eine Signalfolge (S1 + S2) das erste Gatter (32) passiert und anzeigt, dass die optoelektronische Etikette mit einer Speisung versorgt ist, die für einen Betrieb auf mittleren Energieniveau ausreichend ist, dass sich das dritte Gatter (34) öffnet, sobald die Speisespannung (V) höher als die zweite Spannung (V2) ist, so dass eine Signalfolge (S1 + S2 + S3) das erste Gatter (32) passiert und anzeigt, dass die optoelektronische Etikette mit einer Speisung versorgt ist, die für einen Betrieb auf maximalem Energieniveau ausreichend ist, dass die Signalfolgen (S1, S1 + S2, S1 + S2 + S3) ein Aussenden von Ausgangslichtsignalen (37) ermöglicht, die den Zustand der Pufferkapazität (21) als Funktion dieser Signalfolgen (S1, S1 + S2, S1 + S2 + S3) nach aussen anzeigen.

2. Etikette gemäss Anspruch 1, dadurch gekennzeichnet, dass das zweite und dritte Gatter (33, 34) UND-Gatter sind, dass das erste Gatter (32) ein ODER-Gatter ist und dass die Signalfolgen (S1, S1 + S2, S1 + S2 + S3) mit einer Elektroluminenszenzdiode (6) verbunden sind, um Ausgangslichtsignale (37) auszusenden.

3. Etikette gemäss Anspruch 1 oder 2, dadurch gekennzeichnet, dass die von der Pufferkapazität (21) gelieferte Speisespannung (V) an den Eingängen von zwei Komparatoren (23, 24) anliegt, dass ein Ausgang (C1) des ersten Komparators (23) mit dem Eingang des zweiten Gatters (33) verbunden ist, dass ein Ausgang (C2) des zweiten Komparators (24) mit dem Eingang des dritten Gatters (34) verbunden ist, dass diese Ausgänge (C1, C2) gleich 0 sind und das zweite und dritte Gatter (33, 34) schliessen, wenn die Speisespannung (V) niedriger als die erste Spannung (V1) ist, dass der Ausgang (C1) des ersten Komparators (23) gleich 1 ist und das zweite Gatter (33) öffnet und der Ausgang (C2) des zweiten Komparators (24) gleich 0 ist, wenn die Speisespannung (V)) höher als die erste Spannung (V1) und niedriger als die zweite Spannung (V2) ist und dass diese Ausgänge (C1, C2) gleich 1 sind und das zweite und dritte Gatter (33, 34) öffnen, wenn die Speisespannung (V) höher als die zweite Spannung (V) ist.

4. Etikette gemäss einem der Ansprüche 1 bis 3, dadurch gekennzeichnet, dass sie ein optoelektronisches Mittel (39) aufweist, das derart angeordnet ist, dass es Eingangslichtsignale (11) erfasst, dass sie einen Verstärker (40) zum Verstärken der Eingangslichtsignale (11) in entsprechende Signale 1 oder 0 aufweist, dass sie ein Schieberegister (41) aufweist, das mit einem Eingang mit einen Ausgang des Verstärkers (40) und mit einem Eingang mit dem Taktgeber (31) verbunden ist, dass das Schieberegister (41) die 1-Zustände des Ausganges des Verstärkers (40) aufnimmt, die einem vom optoelektronischen Mittel (39) erfassten Eingangslichtsignal (11) entsprechen und die zusammen mit einem Signal (C) vom Taktgeber (31) ankommen und dass aufgenommene 1-Zustände das Schieberegister (41) durchlaufen, wenn der Ausgang des Verstärkers (40) gleich 1 ist.

5. Etikette gemäss einem der Ansprüche 1 bis 4, dadurch gekennzeichnet, dass eine Photodiode (8) die Eingangslichtsignale (11) erfasst, dass ein Ausgang der Photodiode (8) mit einem Verstärker (72) zum Bilden von Pulsen verbunden ist, dass diese Pulse gemäss ihrer Phase auf selbsthaltende Schalter (73) geleitet sind, um aus erfassten Eingangslichtsignalen (11) eine Parallelinformation zu bilden, die ein Ansteuern der Steuerschaltung (61) und ein Schreiben des elektronischen Speichers (59) erlaubt.

6. Etikette gemäss einem der Ansprüche 1 bis 4, dadurch gekennzeichnet, dass die Steuerschaltung (61) und der elektronische Speicher (59) mit einem Demultiplexer (63) verbunden sind, dass das mittlere Signal (S2) eine Pulsfolge ist, dass das mittlere Signal (S2) die Daten bezüglich der optoelektronischen Etikette am Ausgang des Demultiplexers (63) sequentiell abtastet, was eine zeitliche Verteilung der Pulsfolge dieses mittleren Signals (S2) erlaubt und die Daten bezüglich der optoelektronischen Etikette als Funktion der zeitlichen Verteilung der Pulsfolge dieses mittleren Signals (S2) nach aussen anzeigt.

7. Etikette gemäss einem der Ansprüche 1 bis 6, dadurch gekennzeichnet, dass sie Daten bezüglich der optoelektronischen Etikette, die als Ausgangslichtsignale (37) nach aussen gesendet werden, in der ersten Periodenhälfte der Signalfolge (S1, S1 + S2, S1 + S2 + S3) gruppiert und dass sie Eingangslichtsignale (11), die von aussen stammen, in der zweiten Periodenhälfte der Signalfolge (S1, S1 + S2, S1 + S2 + S3) groupiert.

8. Verfahren zur Anzeige der Niveaus der Speisespannung (V) einer Pufferkapazität (21) zur Speisung einer optoelektronische Etikette gemäss Anspruch 1, dadurch gekennzeichnet, dass die verschiedenen Signale (S1, S2, S3), die vom Taktgeber (31) erzeugt werden, sequentiell zu Signalfolgen (S1, S1 + S2, S1 + S2 + S3) zusammengefügt werden und die verschiedenen Niveaus der Speisespannung (V) anzeigen und dass diese Signalfolgen (S1, S1 + S2, S1 + S2 + S3) als Ausgangslichtsignale (37) nach aussen gesendet werden.

9. Verwendung des Verfahrens zur Anzeige der Niveaus der Speisespannung (V) einer Pufferkapazität (21) zur Speisung einer optoelektronische Etikette gemäss Anspruch 8, dadurch gekennzeichnet, dass die Signalfolgen (S1, S1 + S2, S1 + S2 + S3), die die verschiedenen Niveaus der Speisespannung (V) der Pufferkapazität (21) anzeigen, durch optischen Lesen dekodiert werden um anzuzeigen, ob ein Lichtstrahl, der auf die optoelektronische Etikette gerichtet ist, eine ausreichend hohe Energie aufweist, um die optoelektronische Etikette mit einer Speisung zu versorgen, die einen Betrieb auf mittlerem oder maximalem Energieniveau gewährleistet.

10. Verfahren zum Betrieb einer optoelektronischen Etikette gemäss Anspruch 4, dadurch gekennzeichnet, dass vom Schieberegister (41) die 1-Zustände des Ausganges des Verstärkers (40) aufgenommen werden, die einem vom optoelektronischen Mittel (39) erfassten Eingangslichtsignal (11) entsprechen und die zusammen mit einem Signal (C) vom Taktgeber (31) ankommen und dass diese aufgenommenen 1-Zustände das Schieberegister (41) durchlaufen, wenn der Ausgang des Verstärkers (40) gleich 1 ist, was eine Analyse der von aussen kommenden Signale erlaubt.

11. Verfahren gemäss Anspruch 10, dadurch gekennzeichnet, dass ein erster und zweiter Ausgang (Q4,Q8) vom Schieberegister (41) mit einem Gatter (35) verbunden sind, dass vom Schieberegister (41) das Gatter (35) für nach aussen zu sendende Signalfolgen (S1, S1 + S2, S1 + S2 + S3) geöffnet wird, wenn ein 1-Zustand am ersten Ausgang (Q4) ankommt und dass vom Schieberegister (41) das Gatter (35) für nach aussen zu sendende Signalfolgen (S1, S1 + S2, S1 + S2 + S3) geschlossen wird, wenn ein 1-Zustand am zweiten Ausgang (Q8) ankommt, was ein Einschalten der optoelektronischen Etikette von aussen ermöglicht.

## Claims

1. Optoelectronic tag comprising
electro-optical cells (1) arranged in such a way as to pick up light (10) so as to power the optoelectronic tag,
an electronic memory (59) capable of preserving its state in the absence of any power source,
a control circuit (61) connected to the electronic memory (59),
several electro-optical means (6, 8, 39) arranged in such a way as to detect input light signals (11) and to send output light signals (37) and
a sequence generator (31) with a time base (30),
characterized in that
the optoelectronic tag is provided with power by the electro-optical cells (1) via a buffer capacitor (21) making it possible to deliver a supply voltage (V) and to accumulate a certain reserve of energy,
the sequence generator (31) generates a minimum signal (S1) being connected to a first gate (32), a signal of mean level (S2) being connected to a second gate (33), a signal of maximum level (S3) being connected to a third gate (34),
the second gate (33) and the third gate (34) are connected to the first gate (32),
the first gate (32) opens when the supply voltage (V) is less than a first voltage (V1) allowing the minimum signal (S1) to pass the said first gate (32) indicating that the optoelectronic tag is powered, although insufficiently for an operation demanding energy of a mean or maximum level,
the second gate (33) opens when the supply voltage (V) is greater than the first voltage (V1) and less than a second voltage (V2) allowing a sequence of signals (S1 + S2) to pass the said first gate (32) indicating that the optoelectronic tag is powered sufficiently for an operation demanding energy of a mean level,
the third gate (34) opens when the supply voltage (V) is greater than the second voltage (V2) allowing a sequence of signals (S1 + S2 + S3) to pass the said first gate (32) indicating that the optoelectronic tag is powered sufficiently for an operation demanding energy of maximum level,
the sequences of signals (S1, S1 + S2, S1 + S2 + S3) make it possible to send output light signals (37) indicating to the outside the state of charge of the buffer capacitor (21) as a function of the presence of the sequences of signals (S1, S1 + S2, S1 + S2 + S3).

2. Optoelectronic tag according to Claim 1,
characterized in that
the second and third gate (33, 34) are AND gates,
the first gate (32) is an OR gate and
the sequences of signals (S1, S1 + S2, S1 + S2 + S3) are connected to a light-emitting diode (6) making it possible to send output light signals (37).

3. Optoelectronic tag according to Claim 1 or 2,
characterized in that
the supply voltage (V) delivered by the buffer capacitor (21) is linked to the inputs of two comparators (23, 24),
an output (C1) of the first comparator (23) is connected to the input of the second gate (33) and an output (C2) of the second comparator (24) is connected to the input of the third gate (34),
the outputs (C1, C2) are equal to 0 closing the second and third gate (33, 34) when the supply voltage (V) is less than the first voltage (V1),
the output (C1) from the first comparator is equal to 1 opening the second gate (33) and the output (C2) from the second comparator is equal to 0 when the supply voltage (V) is greater than the first voltage (V1) and less than the second voltage (V2) and
the outputs (C1, C2) are equal to 1 opening the second and third gate (33, 34) when the supply voltage (V) is greater than the second voltage (V2).

4. Optoelectronic tag according to one of Claims 1 to 3,
characterized in that
it comprises an electro-optical means (39) arranged in such a way as to detect input light signals (11) and an amplifier (40) amplifying these input light signals (11) so as to deliver corresponding all or nothing signals and
it comprises a shift register (41) having an input connected to an output of the amplifier (40) and an input connected to the sequence generator (31),
the shift register (41) records states equal to 1 of the output of the amplifier (40) for any input light signal (11) detected by the electro-optical means (39) arriving with a signal (C) originating from the sequence generator (31) and
these states equal to 1 progress in the shift register (41) if the output of the amplifier (40) remains at a state equal to 1.

5. Optoelectronic tag according to one of Claims 1 to 4,
characterized in that
the input light signals (11) are detected by a photodiode (8),
an output of the photodiode (8) is connected to an amplifier (72) forming pulses,
the said pulses are directed according to their phase to the inputs of latches (73) making it possible to reconstruct a parallel cue on the basis of the input light signals (11) making it possible to control the control circuit (61) and to write to the electronic memory (59).

6. Optoelectronic tag according to one of Claims 1 to 4,
characterized in that
the control circuit (61) and the electronic memory (59) are connected to a demultiplexer (63),
the signal of mean level (S2) is a string of pulses,
the data relating to the optoelectronic tag are scanned sequentially at the output of the demultiplexer (63) by the signal of mean level (S2), allowing a spreading over time of the string of pulses of the said signal of mean level (S2) and making it possible to send output light signals (37) indicating to the outside the data relating to the optoelectronic tag as a function of the distribution over time of the string of pulses of the said signal of mean level (S2).

7. Optoelectronic tag according to one of Claims 1 to 6,
characterized in that
the sequences of signals (S1, S1 + S2, S1 + S2 + S3) making it possible to send output light signals (37) indicating to the outside the data relating to the optoelectronic tag are grouped within a first half-period of a sequence of signals (S1, S1 + S2, S1 + S2 + S3) and
the input light signals (11) originating from the outside are grouped within a second half-period of the sequence of signals (S1, S1 + S2, S1 + S2 + S3).

8. Method of indicating the levels of supply voltage (V) of a buffer capacitor (21) powering an optoelectronic tag according to Claim 1,
characterized in that
various signals (S1, S2, S3) generated by a sequence generator (31) are appended sequentially forming sequences of signals (S1, S1 + S2, S1 + S2 + S3) indicating the various levels of supply voltage (V) and
the said sequences of signals (S1, S1 + S2, S1 + S2 + S3) are sent in the form of output light signals (37) to the outside.

9. Use of the method of indicating the levels of supply voltage (V) of a buffer capacitor (21) powering an optoelectronic tag according to Claim 8,
characterized in that
the sequences of signals (S1, S1 + S2, S1 + S2 + S3) indicating the various levels of supply voltage (V) of the buffer capacitor (21) are decoded by optical reading means making it possible to ascertain whether the light ray directed onto the optoelectronic tag has sufficient energy to power the optoelectronic tag and to cater for the operations demanding energy of mean or maximum level.

10. Method of operating an optoelectronic tag according to Claim 4,
characterized in that
the shift register (41) records states equal to 1 of the output of the amplifier (40) for any input light signal (11) detected by the electro-optical means (39) arriving with a signal (C) originating from the sequence generator (31) and
these states equal to 1 progress in the shift register (41) if the output of the amplifier (40) remains at a state equal to 1, making it possible to analyse signals originating from the outside.

11. Method according to Claim 10,
characterized in that
the shift register (41) has a first and a second output (Q4, Q8) which are connected to a gate (35),
the shift register (41) opens the gate (35) to the sequences of signals (S1, S1 + S2, S1 + S2 + S3) to be sent to the outside when a state equal to 1 passes at the first output (Q4) and
the shift register (41) closes the gate (35) to the sequences of signals (S1, S1 + S2, S1 + S2 + S3) to be sent to the outside when such a state equal to 1 passes at the second output (Q8), making it possible to switch the optoelectronic tag on or off from the outside.
